# EUROPÄISCHE PATENTANMELDUNG

(11) **EP 2 154 117 A1**
(43) Veröffentlichungstag der Anmeldung: **17.02.2010**
(21) Anmeldenummer: 08161068.5
(22) Anmeldetag: 24.07.2008
(51) Int. Cl.: C04B 18/28, C04B 28/04

(54) **Baustoff oder Fertigmischung mit pflanzlichem Zuschlag**

(71) Anmelder: Miscanthus-Nawaro-Innovations S.A., 1510 Luxembourg (LU)
(72) Erfinder: Peters, Jörg, 54636 Dockendorf (DE)
(74) Vertreter: Office Freylinger

(57) **Zusammenfassung**

Baustoff oder Fertigmischung mit einem pflanzlichen Zuschlag und deren Verwendung, wobei der pflanzliche Zuschlag in Form von zerkleinerten Partikeln vorliegt und der Baustoff bzw. Fertigmischung ein Bindemittel, bevorzugt Zement, sowie einen Mineralisator enthält. Der Mineralisator besteht aus amorphen und/oder krypto- und feinkristallinen Silizium- und/oder Silizium-Aluminium- und/oder Silizium-Eisen- und/oder Silizium-Aluminium-Eisen-Trägern natürlicher und/oder künstlich-industrieller Herkunft oder enthält diese.

## Beschreibung

### Technisches Gebiet

Die vorliegende Erfindung betrifft allgemein einen Baustoff oder eine Baustofffertigmischung nach dem Oberbegriff des Anspruchs 1 sowie Verfahren zu dessen Herstellung und die Verwendung des Baustoffs bei bestimmten Bauteilen.

### Stand der Technik

Es sind bereits verschiedene Baustoffe auf Basis pflanzlicher Materialien bekannt. Um diese Materialien mit einem mineralischen Bindemittel wie beispielsweise Zement binden zu können, scheint es notwendig, die pflanzlichen Materialien zu "mineralisieren", damit sich eine stabile Verbindung der pflanzlichen Materialien mit dem Bindemittel ergibt.

Es ist zum einen bekannt, die Mineralisierung der pflanzlichen Materialien in einem separaten Arbeitschritt vorweg durch eine sogenannte Vormineralisierung durchzuführen. Der Hauptnachteil dieser Methode ist, dass der pflanzliche Zuschlag zuerst mit dem Mineralisator gemischt und anschließend getrocknet werden muss. Ein solcher mineralisierter pflanzlicher Zuschlag kann dann vor Ort mit Bindemittel und Wasser angerührt und verarbeitet werden. Ein weiterer Nachteil dieser Verfahren ist dadurch bedingt, dass diese Mineralisatoren, wie z.B. Aluminiumsulfat, teuer oder umwelttechnisch bedenklich sind.

Außerdem ist es bekannt, Mineralisatoren beim Mischvorgang der Baustoffe vorzusehen, um die Herstellung des Baustoffs vorzugsweise in einem Arbeitsschritt ausführen zu können. Diese Arbeitsweise erlaubt es ohne aufwendige Trocknung des vorab mineralisierten pflanzlichen Zuschlags auszukommen und daher einen wirtschaftlich interessanteren Baustoff zur Verfügung zu stellen. Das Problem mit bekannten sogenannten Direktmineralisatoren ist, dass sich nur eine schwache Bindung zwischen organischen Zuschlägen und der mineralischen Matrix einstellt, was sich durch sehr geringe Druckfestigkeiten äußert.

Einerseits äußert sich diese ungenügende Bindung zwischen mineralischer Matrix und organischen Zuschlägen bei Baustoffen mit gewünscht niedriger Festigkeit durch eine unzureichende Beständigkeit, bzw. Dauerhaftigkeit. Andererseits beobachtet man bei Baustoffen, bei denen eine höhere Festigkeit wünschenswert bzw. notwendig wäre, dass die gewünschte Festigkeit nicht mit bekannten Mineralisatoren erreicht werden kann und/oder dass die nicht den bautechnischen Anforderungen entspricht.

### Aufgabe der Erfindung

Der vorliegenden Erfindung liegt die Aufgabe zu Grunde, einen Baustoff vorzuschlagen, der hinsichtlich seiner Bestandteile einfach zu beschaffen und mit den gewünschten Eigenschaften herzustellen ist. Eine weitere Aufgabe der vorliegenden Erfindung ist es, Baustoffe bereit zu stellen die die obengenannten Nachteile nicht oder in sehr geringerem Umfang aufweisen, insbesondere in Bezug auf deren Festigkeit und/oder deren Beständigkeit.

### Allgemeine Beschreibung der Erfindung

Diese Aufgabe wird nach der vorliegenden Erfindung gemäß Anspruch 1 gelöst, indem bei einem Baustoff oder einer Fertigmischung ein pflanzlicher Zuschlag vorgesehen ist, wobei der pflanzliche Zuschlag vorzugsweise in Form von definiert zerkleinerten Partikeln vorliegt und wobei der Baustoff weiterhin ein Bindemittel sowie einen Mineralisator aufweist. Erfindungsgemäß besteht der Mineralisator aus amorphen, und/oder krypto- und feinkristallinen Silizium-und/oder Silizium-Aluminium- und/oder Silizium-Eisen- und/oder Silizium-Aluminium-Eisen-Trägern natürlicher und/oder künstlich-industrieller Herkunft oder enthält diese Stoffe.

Eine Fertigmischung im Sinne der Erfindung ist eine im wesentlichen trockene Mischung, welche mindestens die obengenannten Ausgangsstoffe enthält. Diese Fertigmischungen können einerseits bevorzugt als Sackware verpackt für den Heimwerkerbereich bestimmt sein, andererseits aber auch im professionellen Baustoffsektor per Silo direkt zur Baustelle befördert werden. Eine erfindungsgemäße Fertigmischung kann durch Hinzufügen wenigstens von Anmachwasser in den eigentlichen Baustoff überführt werden, wobei Bindemittel und Mineralisator die in der Fertigmischung als solche (d.h. in nicht abgebundener Form) vorliegen, im erhärteten Baustoff durch Reaktion mit Anmachwasser in abgebundener Form, oder bei frischem Baustoff in noch nicht oder erst teilweise abgebundener Form vorliegen. Ein solcher Baustoff kann natürlich vorteilhaft auch durch direktes Vermischen der einzelnen Ausgangsstoffe, d.h. pflanzlichem Zuschlag, Mineralisator und Bindemittel, plus Anmachwasser, und ggf. weiteren Ausgangsstoffen vor Ort gemischt werden, z.B. in einem handelsüblichen Betonmischer.

Die "Mineralisierung" des pflanzlichen Zuschlagstoffes mit dem Mineralisator kann in einem Arbeitsschritt, d.h. im Prinzip die Einbringung oder Zugabe des Mineralisators in den Mischvorgang von Bindemittel und gegebenenfalls Anmachwasser erfolgen oder auch als separater Arbeitsschritt vor dem Mischen. Dadurch sind verschiedene technische gängige Verfahrensabläufe möglich, welche je nach Anwendung eigene Vorteile aufweisen:
➢ Undefinierte Mischabfolge, auch als sogenannte Direktmineralisierung bekannt, wobei nachwachsender Rohstoff (pflanzlicher Zuschlag), Mineralisator, Mischwasser, Zugabewasser und Bindemittel baustoffbezogen in einem Mischvorgang verarbeitet werden.
➢ Mischfolge unter Angabe von Mischzeiten, ähnlich einer sogenannten einleitenden Mineralisierung, wobei zuerst der pflanzlicher Rohstoff mit dem Mineralisator und ggf. einem Teil des Anmachwassers (Mischwasser) während einer kurzen ersten Zeit (z.B. von 0.5 bis 5 Minuten) in beliebiger Zugabereihenfolge vorgemischt und dann das Bindemittel mit dem Rest des Anmachwassers (Zugabewasser) zugemischt wird.
➢ Mischfolge ähnlich einer "Vormineralisierung" des pflanzlichen Zuschlags in einem separaten Arbeitsschritt durch Vermischung mit dem Mineralisator, einschließlich eventueller Trocknung mit anschließender Beimischung des Bindemittels und Lagerung. Eine solche Mischreihenfolge ist im Prinzip hauptsächlich vorteilhaft bei der Zubereitung einer Fertigmischung, wie weiter unten beschrieben.

Der Baustoff, bzw. die Baustoff-Fertigmischung nach der vorliegenden Erfindung eignet sich besonders vorteilhaft für die Herstellung von ökologischem und wärmedämmendem Leichtbeton, Mauermörtel, Innen- und Außenputz, Estrich, losen (abgebundenen) Schüttungen, sowie ökologischen und wärmedämmenden Fertigwandelementen, Bausteinen und Dämmplatten, sowie Absorbermaterialien für Lärmschutzwände. Der pflanzliche Zuschlag verleiht dem Baustoff in besonderer Weise wärme- und schalldämmende Eigenschaften und reguliert in hervorragender Weise den Feuchtehaushalt sowohl im Baustoff selbst als auch in den mit diesem Baustoff ausgestatteten Gebäuden.

Die Erfinder haben nun gefunden, dass als Mineralisatoren im Sinne dieser Erfindung Stoffe geeignet sind, die, im Gegensatz zu bekannten, inerten Mineralisatoren, reaktiv in den Hydratationsablauf des Zementes eingreifen bzw. daran beteiligt sind. Durch die Verwendung dieser Mineralisatoren in Baustoffen, z.B. Betonen, mit Zuschlägen aus nachwachsenden Rohstoffen, gelingt es einerseits die Zementsteinmatrix auszusteifen (sogenannter Matrixeffekt, s.u.) und andererseits die Eigenschaften in der Kontaktzone oder an der Schnittstelle zwischen organischem "Zuschlag" und anorganischer Matrix im Hinblick auf eine Erhöhung der Verbundfestigkeit im Vergleich zu bekannten inerten Mineralisatoren nachweislich entscheidend zu verbessern (sogenannter Schnittstelleneffekt, s.u.). Betone mit nachwachsenden Rohstoffen erreichen durch die Zugabe der obengenannten Mineralisatoren erheblich höhere Festigkeiten als vergleichbare Betone ohne Mineralisatoren oder mit bekannten, sogenannten inerten Mineralisatoren (siehe unten beschriebene Beispiele).

Darüber hinaus haben Analysen gezeigt, dass die erfindungsgemäßen Mineralisatoren insbesondere zu einer Verminderung potentiell vorhandener Mikro-Hohlräume in der Kontaktzone zwischen nachwachsendem Rohstoff und Zementstein führen, da diese durch die vermehrte Entstehung festigkeitssteigernder Calciumsilikathydrate überbrückt werden.

Mineralisatoren im Sinne der Erfindung sind alle amorphen und/oder krypto- und feinkristallinen Silicium- bzw. Silicium-Aluminium- bzw. Silizium-Eisen-und Silizium-Aluminium-Eisen-Träger natürlicher und/oder künstlich-industrieller Herkunft und können vorteilhafterweise als Nebenprodukte oder Wertreststoffe bei der Produktion anderer Stoffe anfallen. Im letzteren Fall ermöglicht die Erfindung demnach eine nützliche und umweltschonende Weiterverwertung solcher Nebenprodukte und Wertreststoffe durch direktes Recycling und erspart somit deren aufwändige Weiterbehandlung und/oder umweltverträgliche Entsorgung. Darüber hinaus liegen diese Stoffe nach abgeschlossener Reaktion mit dem Bindemittel mit einer gegenüber dem Ausgangsstoff abgewandelten teilkristallinen Form innerhalb des Baustoffes dauerhaft gebunden vor, wodurch diese somit ökologisch unbedenklich sind.

Zu diesen erfindungsgemäßen Mineralisatoren gehören alle natürliche und künstliche Puzzolane sowie latent-hydraulischen Stoffe. Namentlich und beispielhaft werden die nachfolgenden Stoffe genannt: Kohleasche, Holzasche, Schmelzkammergranulat, Kesselaschen, Eisensilikatschlacke, Gichtstäube, Blähtonmehl und -sande, Schamottemehle, Ziegelmehle, Metakaolin, gebrannter Tonschiefer, getemperter Phonolith, Bauxite, Rotschlamm, Quarzmehl, Si-Schlämme, Glasmehle/Glasabfälle künstlichen und natürlichen (Obsidian und Perlite) Ursprungs, Rhyolithe, Tuffe, Kieselgur, Radiolariten, Diatomeenerden, Trass, Molererden, Gaize, Tripel, vulkanische Aschen, etc., bzw. Mischungen dieser Stoffe.

Ohne sich an eine Theorie gebunden zu fühlen wird davon ausgegangen, dass bei der Erhärtung des Baustoffes dabei die reaktiven, d.h. glasigen bzw. schlecht kristallisierten silikatischen und/oder alumosilikatischen Bestandteile der Mineralisatoren mit dem bei der Hydratation des Zementes entstehenden Portlandit (Ca(OH)₂) und im besonderen mit dem als Überschuss im Hydratationsprozess festigkeitsminderend verbleibenden Rest-Portlandit weiter reagiert und dabei zusätzliche festigkeitssteigernde Calciumsilikathydrate bildet, welche zur Zellulose, der Gerüstsubstanz der Zellwand des pflanzlichen Zuschlags, bzw. des nachwachsenden Rohstoffes, einerseits eine chemische Verbindung, aber andererseits auch eine erhöhte mechanische Bindung durch Verfilzung der Calciumsilikat- und Calciumaluminathydrate mit der pflanzlichen Zellstruktur aufbauen. Der erfindungsgemäß anzuwendende Mineralisator ist somit während der Abbindung des Bindemittels chemisch nicht inert, wie es bei bekannten Mineralisatoren der Fall ist. Bei den bekannten Mineralisatoren wird in einem vorgeschaltetem Schritt, auch als Vormineralisierung bekannt, nur die "mineralische Beschichtung" durch Mischen des pflanzlichen Zuschlags mit Mineralisator und Wasser und anschließender Trocknung des pflanzlichen Zuschlags erzeugt. Diese "mineralische Beschichtung" ist ein zum Bindemittel zwar kompatibler, aber während der Bindemittelabbindung (Hydratation) chemisch inerter Außenmantel. Andere bekannte Mineralisatoren, die nicht durch eine Vormineralisierung des pflanzlichen Zuschlags aufgetragen werden müssen, sondern gleich mit dem Bindemittel eingebracht werden können, weisen eine solche Reaktivität ebenfalls nicht auf.

Die experimentellen Ergebnisse und Analysen weisen darauf hin, dass eben durch die Zusammenwirkung des reaktiven Mineralisators mit Teilen der während der Abbindung des Bindemittels vorhandenen, bzw. entstehenden chemischen Bestandteile die guten Eigenschaften der Baustoffe bewirkt werden und dies in einem Ausmaße, das so vom Fachmann nicht zu erwarten war. Der erfindungsgemäß anwendbare Mineralisator scheint demnach im Gegensatz zu bekannten Mineralisatoren nicht die Kompatibilität des pflanzlichen Zuschlags zur (später eingebrachten) Bindemittelmatrix, sondern umgekehrt die Kompatibilität der abgeänderten Bindemittelmatrix zum pflanzlichen Zuschlag zu erhöhen. Diese Theorie wird insbesondere dadurch bestärkt, dass die Messungen unabhängig von der Zugabereihenfolge (Mischverfahren) ähnlich gute Resultate ergeben, wobei sich eine leichte Verbesserung bei einem Mischverfahren ähnlich einer Vormineralisierung oder ähnlich einer einleitenden Mineralisierung dadurch erklären lässt, dass in einem solchen Fall der Mineralisator sich verstärkt an eben den Stellen befindet, wo er für die bessere Anbindung der mineralischen Matrix an den organischen Zuschlag durch Reaktion mit dem Bindemittel gebraucht wird.

Durch die gezielte Anlagerung der feinteiligen Fraktionen des Mineralisators auf der Spanoberfläche des nachwachsenden Rohstoffs und das dadurch erreichte Eindringen in die porige, offene Struktur der pflanzlichen Zuschläge wird erreicht, dass die CSH-Phasen (Calciumsilicathydrat-Phasen) während des Hydratationsvorgangs, angeregt durch die Reaktivität des Mineralisators, tiefer und vernetzter in die Zellstruktur der pflanzlichen Zuschläge hineinwachsen als dies bisher bekannt war. Bisherige (Vor)Mineralisatoren weisen diesen Effekt nicht auf und verhindern sogar das spätere Einwachsen der Kristalle, da sie als inerte Grundierung die Zellstruktur verschließen und diese einem solchen vorteilhaften Vorgang entziehen.

Somit erhält man einen in hohem Maße gesteigerten und festeren Verbund der Zementmatrix nicht nur mit der äußeren für die gröberen Kristalle einer herkömmlichen Bindemittelmatrix erreichbaren Oberfläche, sondern auch durch die Ausnutzung des überschüssigen (und ansonsten ungenutzten) Portlanditanteils in der Bindemittelmatrix durch Reaktion mit dem feinteiligen Mineralisator bis in die feinporige pflanzliche Struktur der nachwachsenden Rohstoffe hinein.

Ein weiteres positives Merkmal ist, dass die Wirksamkeit des Mineralisators sich dabei wesentlich mit seiner Feinteiligkeit verbessert, wobei die höchste Wirksamkeit im Hinblick auf die erreichbare Endfestigkeit des Betons, mit der Zugabe kornabgestufter Mineralisatoren oder Abmischungen von Mineralisatoren erreicht wird. Es scheint es als ob die feinere Fraktion hauptsächlich eben diesen Effekt des Einwachsens der Kristalle fördert (Effekt an der Schnittstelle zwischen pflanzlichem Material und Bindemittelmatrix, auch Schnittstelleneffekt genannt), andererseits eine gröbere Fraktion des Mineralisators eher dazu dient den Portlandit-Restanteil aufzuschließen (Effekt innerhalb der Bindemittelmatrix, auch Matrixeffekt genannt).

Dabei ist zu beachten, dass, wie oben beschrieben, größere Körnungen, wie z.B. 0,2 - 1 mm, vorhanden sein können, diese aber an sich den oben beschrieben Schnittstelleneffekt nicht, bzw. nur unzureichend ergeben. In der Praxis wird daher der Mineralisator bevorzugt nur in Form von Fein- und Feinstkörnungen benutzt oder, falls (geringere Mengen an) gröbere(n) Körnungen enthalten sind, wird nur dieser feine Teil, d.h. mit einer Korngröße von 0 bis 0,2 mm, bevorzugt 0 bis 0,1 mm, zur Berechnung der in die Baustoffmischung einzusetzenden Menge berücksichtigt. Dabei ist anzumerken, dass eine bestimmte Feinteiligkeit und/oder Kornabstufung auch in vorteilhafter Weise durch Mischen/Kombinieren von mehreren verschiedenen Mineralisatoren erreicht werden kann.

In einer bevorzugten Ausführungsform der Erfindung wird demgemäß der Mineralisator, falls notwendig in an sich bekannten Vorrichtungen definiert zerkleinert, bzw. gemahlen, z.B. in einer Schwingmühle, und gegebenenfalls gesiebt und/oder gesichtet, wobei vorzugsweise nur die obengenannten Fein- und Feinstkörnungen verwendet werden.

Als pflanzliche Rohstoffe für die Zuschläge eignen sich vorteilhaft Hölzer, Pflanzen oder Teile von Pflanzen, wie auch Wurzeln, Stängel, Früchte, Fruchtstände, Blätter oder Nadeln, sowie Teile davon, oder Teile von Pflanzen, welche als Reste aus der industriellen Verwertung oder der Lebensmittelproduktion anfallen (z.B. Rispen, Fasern, Schalen, Kerne, usw.), vorteilhaft aus dem Anbau oder vorhandenen Vorkommen vor Ort. Es hat sich für bestimmte Anwendungen, bei denen es auf die mechanische Festigkeit des Baustoffs ankommt, als vorteilhaft erwiesen, wenn der pflanzliche nachwachsende Rohstoff harte Fasern aufweist. In Frage kommen beispielsweise Miscanthus, Hanfschäben, Hanffasern, Nadelholz, Laubholz, Stroh, Switchgräser, Riedschilf, Bambus oder ähnliche Pflanzen einzeln oder in verschiedenen Kombinationen.

Die pflanzlichen Rohstoffe werden vor ihrer Verwendung definiert zerkleinert. Die definierte Zerkleinerung ist als zweckorientiert zu verstehen und erfolgt abhängig von der Art des verwendeten Rohstoffs, den gewünschten Eigenschaften des Baustoffs sowie den Anforderungen an die zu erzeugenden Bauelemente. Die zerkleinerten Teilchen können vorteilhaft z.B. Abmessungen von bis zu 40 mm Länge aufweisen oder als Granulat ausgebildet sein mit einem Durchmesser von bis zu 10 mm.

Die Zerkleinerung der nachwachsenden Rohstoffe erfolgt definiert in bekannten zweckmäßigen Vorrichtungen, z.B. in einer Hammermühle. Dabei werden zur Herstellung der gewünschten Fraktionen die Einstellungen z.B. der Hammermühle, wie Drehzahl, Mahlbahnabstand, usw., sowie die eingesetzten Siebsätze mit deren Lochungsgrößen und -formen entsprechend der gestellten Anforderungen vorgenommen.

Auf diese Weise lässt sich für die jeweiligen Baustoffe eine im höchsten Maße konstante Rohstoffqualität aus den regional verfügbaren und nicht immer gleichen Ausgangsmaterialien herstellen und garantieren.

Ein weiterer Nachteil der bekannten Verfahren ist, dass sie unabhängig von der Natur der bekannten, inerten Mineralisatoren einen pflanzlichen Zuschlag in Form von trockenen Spänen erfordern, d.h. die Anwesenheit des natürlich vorhandenen Wassers im organischen Rohstoff ist dem Stand der Technik entsprechend weitestgehend zu vermeiden. Deshalb muss bei diesen bekannten Verfahren der pflanzliche Rohstoff zuerst bis zu Restfeuchten von 15 % oder weniger getrocknet werden, was natürlich nicht nur zusätzliche Kosten verursacht, sondern auch praktische und logistische Probleme aufwirft.

Es wurde nun als vorteilhaft herausgefunden, dass es bei der direkten Herstellung der Baustoffe aus den einzelnen Ausgangsstoffen im Gegensatz zum bekannten Stand der Technik vorteilhaft ist, wenn der pflanzliche Zuschlag nicht zu trocken ist, wobei die länger andauernde Abgabe der Eigenfeuchte des pflanzlichen Zuschlags in die Bindemittel/Mineralisator-Matrix den Hydratationsablauf des Bindemittelkorns bzw. die Reaktivität des Mineralisators in hohem Maße zu begünstigen scheint und dadurch höhere Festigkeiten erreichbar sind. Das bedeutet, dass je nach Pflanze diese einen Restwassergehalt von mehr als ca. 20 % aufweisen sollte und bis ca. 60 % aufweisen kann, bevorzugt ca. 25 % bis ca. 55 %, wobei der Wassergehalt das Verhältnis zwischen Wasser und Gesamtsubstanz bezogen auf das Pflanzenmaterial ist. Es sei ausdrücklich darauf hingewiesen, dass somit der Baustoff auch mittels nicht vorab getrockneter pflanzlicher Zuschläge hergestellt werden kann. Im Prinzip ist das spezifische Gewicht des pflanzlichen Zuschlags einerseits abhängig von der Art des Rohstoffs und andererseits von der darin enthaltenen Feuchtigkeit. Um etwaige Unklarheiten auszuschließen sind folgenden Angaben auf das spezifische Trockengewicht (sogenanntes atro-Gewicht), d.h. ohne Wasser und ohne z.B. durch Transport bedingte Verunreinigungen bezogen. Bevorzugt liegt dieses spezifische Trockengewicht des pflanzlichen Zuschlags zwischen 10 und 350 kg/m³, insbesondere zwischen 40 und 280 kg/m³ und ganz besonders zwischen 50 und 200 kg/m³ loses Schüttgut, je nach Anwendung.

Bei der Herstellung einer Fertigmischung, die auch das Bindemittel enthält ist es hingegen vorteilhaft, wenn der Restwassergehalt des organischen Zuschlagmaterials im unteren Bereich liegt, damit das Bindemittel nicht vorzeitig abbindet. In einer bevorzugten Ausführungsform der Erfindung kann dies dadurch erreicht werden, dass der pflanzliche Zuschlag mit einem höheren Restwassergehalt zuerst mit dem trockenen Mineralisator vermengt wird, wodurch ein Teil dieses Restwassergehalts fest adsorbiert im Mineralisator gebunden wird. Falls erforderlich, z.B. bei einem sehr hohen Anfangsrestwassergehalt, kann diese Mischung ggf. weiter getrocknet werden, um den Überschuss an nicht adsorbiertem Wasser zu entfernen.

Auch im Fall der direkten Herstellung des Baustoffs aus den einzelnen Ausgangsstoffen kann es vorteilhaft sein in einem ersten Schritt den pflanzlichen Zuschlag und den Mineralisator (ggf. mit etwas Wasser, speziell bei trockenen Spänen mit einem Wassergehalt unter 20 %) vorzumischen (ähnlich einer sogenannte einleitenden Mineralisierung). Dadurch wird erreicht, dass der Mineralisator, dessen Aufgabe die bessere Anbindung der mineralischen Matrix an die organische Zellstruktur ist, an eben der Stelle zur Verfügung steht, an der er mit dem anschließend hinzugefügten Bindemittel reagieren wird, um, wie bereits oben erwähnt, eine vollständigere Verbindung mit den organischen Fasern und eine durch die Förderung des Wachstums feinerer Kristalle verbesserte Verfilzung der mineralischen Matrix mit der organischen Zellstruktur zu erreichen.

Da es bei der Erfindung vorteilhaft ist, auch mit relativ feuchten (frischen) pflanzlichen Rohstoffen (im allgemeinen ca. 25 - 55 % Wassergehalt) zu arbeiten, die bei längerer Lagerung aber durch natürliche Zersetzung durch Mikroorganismen und Pilzbefall Schaden nehmen könnten, ist ein weiterer Vorteil dieser Verfahrensweise, dass man die frischen pflanzliche Rohstoffe gleich mit mindestens einem Teil des erfindungsgemäßen Mineralisators vermischt, was einerseits ein Teil des Wassergehalts wie schon beschrieben bindet, andererseits aber auch andere Bedingungen, wie pH-Wert, usw. so beeinflusst, dass diese natürliche Zersetzung gehemmt oder sogar unterbunden wird.

Eine weitere Möglichkeit der längeren Lagerung bietet die sogenannte Nasslagerung, wobei durch ständige Berieselung der Späne mit Wasser die Zersetzung gehemmt wird, und eine Lagerung von bis zu zwei Jahren möglich ist.

In allen Fällen ergibt sich dadurch vorteilhaft eine einfache Zusammensetzung, weil die nachwachsenden Rohstoffe Hölzer oder Pflanzen sein können, die aus der lokalen Forst- oder Landwirtschaft "vor Ort" stammen. Die pflanzlichen Zusatzstoffe sowie die Mineralisatoren können dadurch einfach beschafft werden, weil insbesondere die pflanzlichen Zusatzstoffe regional verfügbar sind.

Außerdem wurde festgestellt, dass die oben beschriebenen Baustoffe vorteilhafterweise eine höhere Dauerhaftigkeit aufweisen als ähnliche, bekannte Baustoffe.

Ein weiterer Vorteil der Erfindung betrifft die gute Verarbeitbarkeit der Baustoffe, was sich in der Praxis als wichtige Bedingung herausgestellt hat.

Als Bindemittel sind grundsätzlich alle hydraulischen Bindemittel geeignet, vorzugsweise jedoch Zemente entsprechend DIN EN 197 und DIN 1164, bevorzugt Portlandzemente CEM I der Festigkeitsklassen 42,5R und 52,5R oder Kombinationen verschiedener Zemente davon.

Bei der Herstellung der hier beschriebenen Baustoffe mit Zement als Bindemittel wird die Menge an Anmachwasser vorzugsweise, wie auch bei der Herstellung von Normalbeton, anhand des gewichtsbezogenen Verhältnisses von Wasser zu Zement, dem als Stand der Technik definierten Wasser-Zement-Wert bekannt (w/z-Wert) angegeben.

Versuche und Analysen haben nun gezeigt, dass sich entgegen dem Stand der Technik durch Erhöhung des Wasser-Zement-Wertes über die bekannten Werte hinaus eine Festigkeitssteigerung erreichen lässt.

Der empfohlene w/z-Wert bei Normalbeton liegt zwischen 0,5 und 0,7. Z.B. erreicht ein Beton C25/30 in der Konsistenz F3 mit einem Wasser-Zement-Wert von 0,63 eine Festigkeit von 34 N/mm², bei einem w/z-Wert von 0,85 tritt jedoch eine Verminderung um ca. 60 % auf nur noch 14 N/mm² ein.

Der w/z-Wert der erfindungsgemäßen Baustoffe liegt dagegen zwischen 0,6 und 2,5, bevorzugt zwischen 0,70 und 1,50. Erstaunlicherweise liefern auch sehr hohe Werte gute (teils sogar wesentlich bessere) Ergebnisse in bezug auf die Festigkeit der erhaltenen Baustoffe. So erreicht z.B. ein Beton mit Holzspänen (Holzspanbeton) aus Beispiel I mit einem w/z-Wert von 0,96 eine Festigkeit von 3,8 N/mm², mit einem w/z-Wert von 1,25 tritt jedoch eine Steigerung um ca. 80 % auf 6,8 N/mm² ein.

Bevorzugt weist der Baustoff oder die Fertigmischung ein Gewichtsverhältnis von Bindemittel zu Mineralisator zwischen 50 : 50 bis zu 99 : 1, je nach Verwendungszweck auf, z.B. bevorzugt zwischen 98 : 2 und 70 : 30 für Baustoffe mit geringer Festigkeit und bis z.B. bevorzugt zwischen 80 : 20 und 60 : 40 für festere Baustoffe.

Je nach Zweck des Baustoffs oder der Fertigmischung werden pro Kubikmeter des fertig verdichteten Baustoffs 50 kg bis 300 kg, bevorzugt 70 kg bis 280 kg Bindemittel eingesetzt, sowie 1 kg bis 300 kg Mineralisator, bevorzugt 8 kg bis 100 kg.

Außer den beschriebenen Bestandteilen können noch weitere Zuschlagstoffe vorgesehen werden, z.B. solche, die die Maschinenverarbeitung des Baustoffs ermöglichen oder weiter verbessern. Dies betrifft beispielsweise die Zugabe von Kalk oder Gips z.B. für einen Baustoff, der als Innenputz verwendet werden soll. Beide Zusatzstoffe dienen in diesem Fall nur dazu, die Verarbeitbarkeit der Baustoffe zu verbessern. Es ist dabei natürlich zu bedenken, dass sie in Mengen eingesetzt werden, die sich nicht zu nachteilig auf die physikalischen und mechanischen Eigenschaften des Baustoffs auswirken.

Weiterhin können durch Zugabe von anderen Zuschlagstoffen, wie beispielsweise Sand in unterschiedlichen Qualitäten, verschiedene physikalische und mechanische Eigenschaften des Baustoffs beeinflusst werden.

Verwendet werden kann Sand, erhältlich als handelsübliche Ware in unterschiedlichen Körnungen und Zusammensetzungen. Er kann eingesetzt werden um bestimmte mechanische und physikalische Eigenschaften zu verbessern und zugleich damit verbundene Verschlechterungen kalkuliert in kauf zu nehmen (je nach Einsatzzweck). Die Zumischung von Sand erlaubt es die Kennwerte bestimmter Eigenschaften, wie z.B. Festigkeit, Biegezug, E-Modul, Kriechen, Schwinden und die Speichermasse, bekanntermaßen zu verbessern, führt aber andererseits zu teilweise schlechteren Werten im Bezug z.B. auf Gewicht, Wärmedämmung, Wärmeleitfähigkeit und Verarbeitbarkeit.

Weiterhin betrifft die Erfindung die Verwendung des oben beschriebenen Baustoffs zur Herstellung von Wänden.

Es kann sich dabei um Außenwände oder auch um Innenwände handeln. Es ist dabei zum einen möglich, aus dem Baustoff Steine herzustellen, aus denen die Wand aufgebaut wird. Zum anderen ist es möglich, größere Wandelemente vorzusehen, die entsprechend zu verbinden sind.

Sofern es um die Herstellung von Außenwänden, Mauersteinen, Lärmschutzwänden oder anderen Bauteilen mit entsprechenden mechanischen Anforderungen geht, liegt die gewünschte Länge der Fasern der nachwachsenden Rohstoffe in einem Bereich bis zu ca. 40 mm, bzw. der Durchmesser oder die Körnung bei Granulaten zwischen 0 mm und 10 mm. Es hat sich gezeigt, dass sich bei diesen Abmessungen die geforderten mechanischen Eigenschaften einstellen, wobei längere Fasern innerhalb dieses Bereiches generell zu einer Verbesserung der Zugfestigkeit und der Duktilität, und damit des Bruch- und Rissverhaltens führen und kürzere Fasern oder Granulate leichter zu verarbeiten sind.

Eine bevorzugte Ausgestaltung betrifft die Verwendung des oben beschriebenen Baustoffs oder der Fertigmischung zur Herstellung von schall-und/oder wärmedämmenden Bauelementen.

Sofern damit auch mechanische Anforderungen verbunden sind, wird hinsichtlich der verbleibenden Größe der zerkleinerten pflanzlichen Rohstoffe auf die Ausführungen im Zusammenhang mit den Wänden verwiesen.

Neben der Verwendung des Baustoffs erweist es sich im Zusammenhang mit der Schalldämmung und -absorption ebenfalls als vorteilhaft, die äußeren Strukturen der Bauteile entsprechend zu gestalten. So erweist sich beispielsweise eine lamellenförmige Außenstruktur als vorteilhaft zur Herstellung von Schallabsorberflächen.

Wie bereits erwähnt betrifft die Erfindung auch die Verwendung des oben beschriebenen Baustoffs zur Herstellung von Mörtel oder Putz.

Wenn der Baustoff oder die Fertigmischung als Verputz verwendet werden soll, liegt die Körnung des pflanzlichen Zuschlags vorteilhaft im Bereich z.B. zwischen 0 und 1 mm für Feinputze, 0 und 3 mm für Normalputze und 0 und 5 mm für Grobputze. Dadurch wird, bei guten mechanischen Eigenschaften, die Möglichkeit gegeben eine ausreichend glatte Oberfläche zu erzielen. Insbesondere für die Verwendung als Putz sei nochmals darauf hingewiesen, dass dann auch weitere Stoffe zugegeben werden können, wie z.B. Kalk, Gips oder Sand, um anwendungsspezifische Eigenschaften zu verbessern, z.B. die Verarbeitungszeit oder die Maschinenverarbeitbarkeit des Baustoffs.

Es kann sich dabei auch um einen schall- und/oder wärmedämmenden Putz handeln oder um Fertigplatten, die auf eine bestehende Wand aufgebracht werden können. Die bestehende Wand kann aus konventionellen Baustoffen hergestellt sein oder auch aus Baustoffen mit pflanzlichen Zuschlägen, wie beispielsweise im Fall der oben erwähnten Wänden aus Steinen oder als vorgefertigte Bauelemente.

Der Baustoff kann auch als lose Schüttung hergestellt werden, wobei alle Ausgangsstoffe nach einem der oben beschriebenen Verfahren gemischt werden, die Mischung aber weiter während der Aushärtung bewegt und belüftet wird, z.B. in einem Trommelmischer. Es ist auch möglich, die erforderliche Bewegung des Baustoffs während des Abbindens auf einem Bandförderer bei gleichzeitigem Eintrag von Vibrationsenergie vorzunehmen. Der so abgebundene, lose Baustoff kann anschließend für weitere Anwendungen zwischengelagert werden, ohne wegen der zuvor erfolgten Aushärtung des Bindemittels seine Schüttguteigenschaften zu verlieren.

Anschließend kann die weitere Anwendung des derartig hergestellten Baustoffs in Form einer losen Schüttung für Zwecke der Wärme- und/oder Trittschalldämmung vorgesehen werden. Es ist auch möglich, den Baustoff in leichten und/oder wärmedämmenden Leichtbetonkonstruktionen oder Estrichen einzusetzen in dem man diesen losen Baustoff vor Ort mit zusätzlichem Bindemittel oder sogar mit einem frisch zubereiteten erfindungsgemäßen Baustoff vermischt und abbinden lässt.

Wie aus den beschriebenen Anwendungsbeispielen hervorgeht, ist ein weiterer wichtiger Vorteil der Erfindung, dass sich aus den Baustoffen die verschiedensten Bauteile herstellen lassen, z.B. Wände, Estriche, Putze, usw. wobei sich diese dann kompatibel kombinieren und verarbeiten lassen, da sie sehr ähnliche Werkstoffeigenschaften, wie z.B. Dehnverhalten, Schwindmaß, Feuchtigkeitshaushalt, ... aufweisen.

Die Erfindung betrifft auch die Verwendung des oben beschriebenen Baustoffs oder der oben beschriebenen Fertigmischung zur Herstellung eines Füllmaterials zur Ausfüllung der Gefache von Fachwerkbauten.

Hierbei erweist sich die Verwendung der Baustoffe oder der Fertigmischungen mit den pflanzlichen Zuschlägen weiterhin als vorteilhaft, weil sich diese Baustoffe mit der tragenden Holzkonstruktion der Fachwerkbauten gut kombinieren lassen.

### Kurze Beschreibung der Figuren

Im Folgenden werden nun Ausgestaltungen der Erfindung anhand der beiliegenden Figuren beschrieben. Diese zeigen:
Fig.1: das Siebliniendiagramm des pflanzlichen Zuschlags: Holzspäne (siehe auch Tabelle 1).
Fig. 2: das Siebliniendiagramm des pflanzlichen Zuschlags: 8x80 mm (siehe auch Tabelle 2).
Fig. 3: das Siebliniendiagramm des pflanzlichen Zuschlags: 2,5x50 mm (siehe auch Tabelle 3).
Fig. 4: ein Siebliniendiagramm des pflanzlichen Zuschlags: Miscanthus (siehe auch Tabelle 4).

Weitere Einzelheiten und Vorteile der Erfindung können der nachfolgenden ausführlichen Beschreibung möglicher Ausführungsformen der Erfindung anhand der beiliegenden Figuren entnommen werden.

### Kurze Beschreibung einiger Beispiele

Im Folgenden werden nun Ausgestaltungen der Erfindung anhand einiger Beispiele beschrieben.

**Prüfungen / Geräte**

1. Mischer:

a. Labormischer: Freifallmischer, Fabrikat: Atika: Typ HM130.

b. Produktionsmischer: Planetengegenstrommischanlage, Fabrikat: Haarup, Typ: 1500/4 - 863

2. Gewichte:

Die Gewichte der einzelnen Zutaten der Rezepturen, sowie der fertigen Baustoffe, werden mit einer geeichten Laborwaage z.B. (Kern, 36K10N) ermittelt.

3. Wassergehalt:

Der Wassergehalt der Rohstoffe wird mit einem geeichten Labormessgerät z. B. ACO Feuchtemessgerät, Typ UX 2031 ermittelt.

4. Festigkeit:

Die Druckfestigkeiten der fertigen Baustoffe nach dem Erstarren des Zementes werden mit einer geeichten Druckprüfmaschine z.B. Testing Druckprüfmaschine, Genauigkeitsklasse 1, bis 2000 KN, Typ ADR, ermittelt.

5. Biegezug und E-Modul:

Biegezug und Elastizitätsmodul der fertigen Baustoffe werden mit einer geeichten Druckprüfmaschine, z. B. Testing Maschinenkombination für Festigkeit, E-Modul, Biegezug Genauigkeitsklasse 1, bis 3000 K, ermittelt.

6. Sieblinien:

Die Sieblinien der Rohstoffe werden mit einem Siebgerät, z.B. Harer u. Boecker, Typ EML 300 digital plus, ermittelt.

Verwendete Sieblinien des pflanzlichen Zuschlags

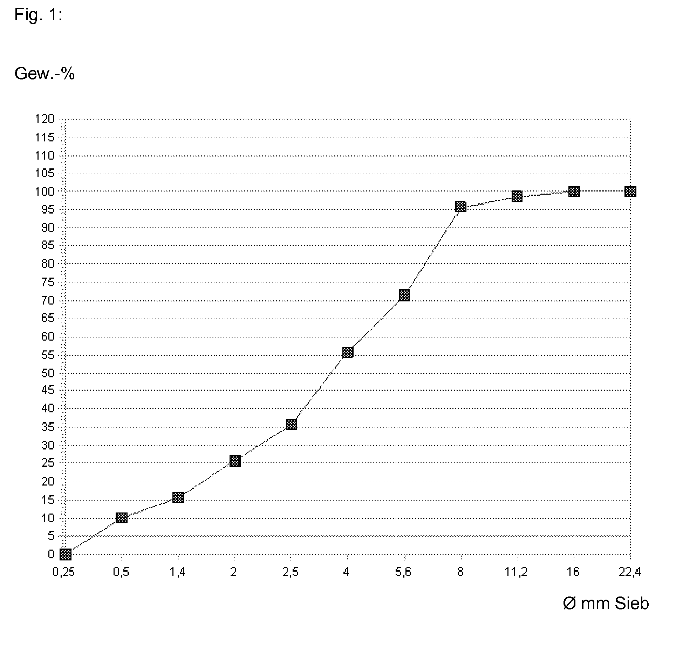

**Tabelle 1: Zuschlagprüfung A - Hobelspäne (Fig. 1; Beispiel VI)**

| | | | | | | | | | | | |
|---|---|---|---|---|---|---|---|---|---|---|---|
| Siebloch (mm) | 0,25 | 0,5 | 1,4 | 2 | 2,5 | 4 | 5,6 | 8 | 11,2 | 16 | 22,4 |

| Prüfgutmenge | Rückstand in g auf den Sieben | | | | | | | | | | |
|---|---|---|---|---|---|---|---|---|---|---|---|
| Probe 1 70 g | 70 | 63 | 59 | 52 | 45 | 31 | 20 | 3 | 1 | 0 | 0 |
| Rückstand % | 100 | 90 | 84,3 | 74,3 | 64,3 | 44,3 | 28,6 | 4,3 | 1,4 | 0 | 0 |
| Durchgang % | 0 | 10 | 15,7 | 25,7 | 35,7 | 55,7 | 71,4 | 95,7 | 98,6 | 100 | 100 |

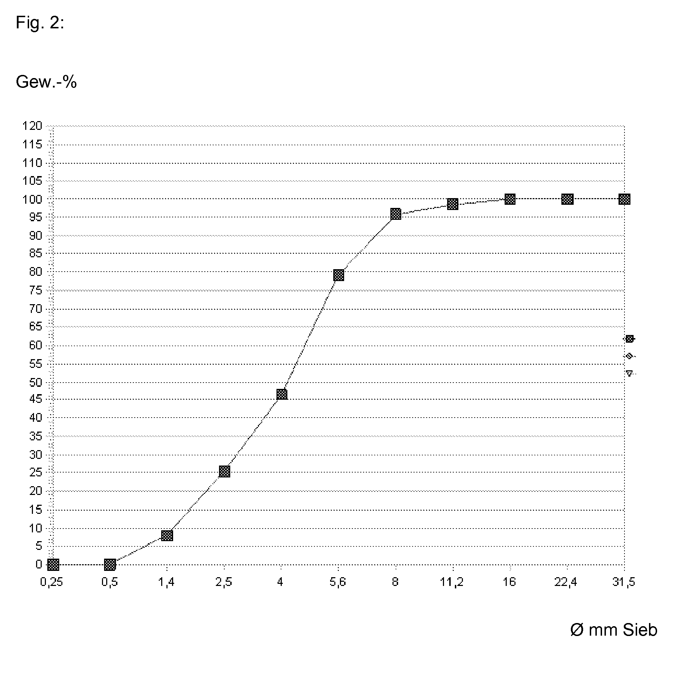

**Tabelle 2: Zuschlagsprüfung B - 8x80 (Fig. 2, Beispiele I, la, Ib, Ic, V)**

| | | | | | | | | | | | |
|---|---|---|---|---|---|---|---|---|---|---|---|
| Siebloch (mm) | 0,25 | 0,5 | 1,4 | 2,5 | 4 | 5,6 | 8 | 11,2 | 16 | 22,4 | 31,5 |

| Prüfgutmenge | Rückstand in g auf den Sieben | | | | | | | | | | |
|---|---|---|---|---|---|---|---|---|---|---|---|
| Probe 1 357g | 357 | 357 | 325 | 266 | 189 | 74 | 11 | 3 | - - - - | - - - - | - - - - |
| Probe 2 363g | 363 | 363 | 330 | 271 | 197 | 76 | 18 | 8 | - - - - | - - - - | - - - - |
| Gesamt 720g | 720 | 720 | 655 | 537 | 386 | 150 | 29 | 11 | - - - - | - - - - | - - - - |
| Rückstand % | 100 | 100 | 91,0 | 74,6 | 53,6 | 20,8 | 4,1 | 1,5 | - - - - | - - - - | - - - - |
| Durchgang % | 0 | 0 | 8,0 | 25,4 | 46,4 | 79,2 | 95,9 | 98,5 | - - - - | - - - - | - - - - |

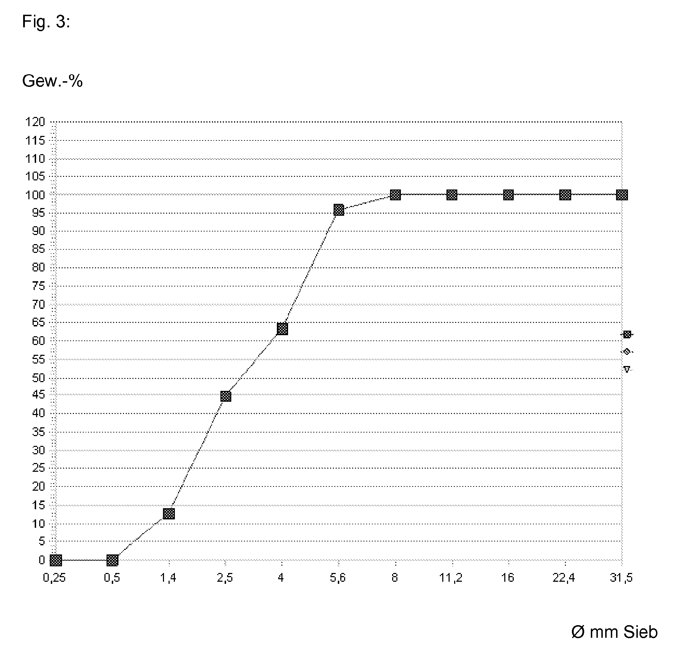

**Tabelle 3: Zuschlagsprüfung C - 2,5X50 (Fig. 3, Beispiele II, IIa, IIb, IV)**

| | | | | | | | | | | | |
|---|---|---|---|---|---|---|---|---|---|---|---|
| Siebloch (mm) | 0,25 | 0,5 | 1,4 | 2,5 | 4 | 5,6 | 8 | 11,2 | 16 | 22,4 | 31,5 |

| Prüfgutmenge | Rückstand in g auf den Sieben | | | | | | | | | | |
|---|---|---|---|---|---|---|---|---|---|---|---|
| Probe 1 302g | 302 | 302 | 263 | 169 | 111 | 10 | 0 | - - - - | - - - - | - - - - | - - - - |
| Probe 2 325g | 325 | 325 | 284 | 178 | 119 | 16 | 0 | - - - - | - - - - | - - - - | - - - - |
| Gesamt 627g | 627 | 627 | 547 | 347 | 230 | 26 | 0 | - - - - | - - - - | - - - - | - - - - |
| Rückstand % | 100 | 100 | 87,2 | 55,3 | 36,7 | 4,2 | 0 | - - - - | - - - - | - - - - | - - - - |
| Durchgang % | 0 | 0 | 12,8 | 44,7 | 63,3 | 95,8 | 100 | - - - - | - - - - | - - - - | - - - - |

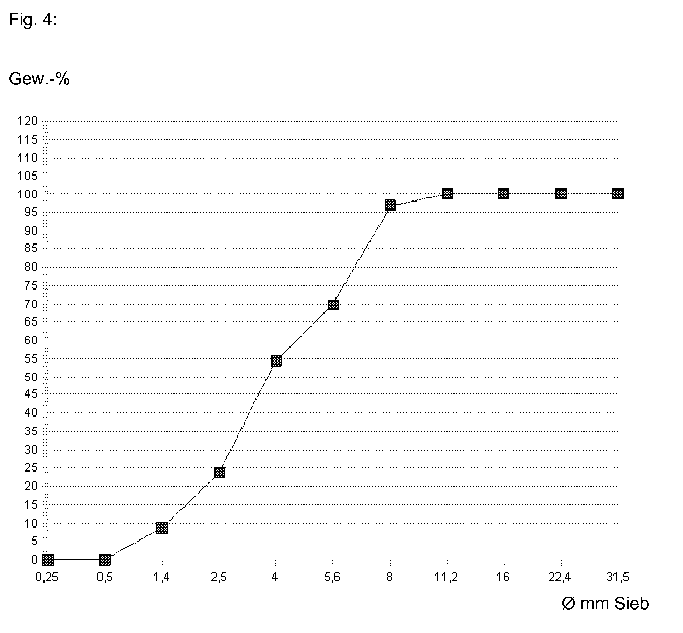

**Tabelle 4: Zuschlagsprüfung D - Miscanthus (Fig. 4, Beispiel VI)**

| | | | | | | | | | | | |
|---|---|---|---|---|---|---|---|---|---|---|---|
| Siebloch (mm) | 0,25 | 0,5 | 1,4 | 2,5 | 4 | 5,6 | 8 | 11,2 | 16 | 22,4 | 31,5 |

| Prüfgutmenge | Rückstand in g auf den Sieben | | | | | | | | | | |
|---|---|---|---|---|---|---|---|---|---|---|---|
| Probe 1 204g | 204 | 204 | 186 | 156 | 92 | 60 | 5 | 0 | 0 | 0 | 0 |
| Probe 2 210g | 210 | 210 | 192 | 160 | 97 | 65 | 8 | 0 | 0 | 0 | 0 |
| Gesamt 414g | 414 | 414 | 378 | 316 | 189 | 125 | 13 | 0 | 0 | 0 | 0 |
| Rückstand % | 100 | 100 | 91,3 | 76,3 | 45,6 | 30,2 | 3,1 | 0 | 0 | 0 | 0 |
| Durchgang % | 0 | 0 | 8,7 | 23,7 | 54,4 | 69,8 | 96,9 | 100 | 100 | 100 | 100 |

Die Werte der oben dargestellten Tabellen sind in den Figuren 1 bis 4 als Anhang zur grafischen Darstellung angefügt. Die entsprechend den Sieblinien zerkleinerten pflanzlichen Rohstoffe finden in dieser Form in den nachfolgend beschriebenen Beispielen Anwendung.

7. Trockenschrank:

z. B. Memmert Mod. 100 800

**Beispiel I:**

Mischung Baustoff für Wände/Steine wärmedämmend

Grundrohstoff:
- Holzhackschnitzel Handelsware
- Handelsbezeichnung G30
- Fichte / Tanne
- Rindenanteil < 5%
- Wassergehalt 40 %

Zerkleinerung mit einer Hammermühle PHMS 8 - 6 mit Langlochsieb 8x80 mm, Tabelle 2

| | | |
|---|---|---|
| Rohstoff zerkleinert | 222 kg | |
| Wassergehalt | 30 % | |
| Portlandzement CEM I 42,5 R | 250 kg | Wasser-Zement (w/z) |
| Mineralisator Blähtonsand 0-1 | 80 kg | Wert 0,96 |
| Anmachwasser | 240 kg | |

Mischung:

| | |
|---|---|
| 1. Späne | |
| 2. Mineralisator | (T = 3 min) |
| 3. Zement | (T= 2 min) |
| 4. Anmachwasser | (T = 7 min) |

fertiger Baustoff, verdichtet

| | |
|---|---|
| g-Dichte frisch | 792 kg/m³ |
| g-Dichte mit Ausgleichs- Wassergehalt ∼ 20 % | 665 kg/m³ |
| g-Dichte trocken (atro) | 633 kg/m³ |
| Festigkeit | 3,8 N/mm² |
| Biegezug | 1,6 N/mm² |
| Rλ | 0,124 W/mK |

**Beispiel Ia: bekannter Mineralisator CaCO₃**

Mischung Baustoff für Wände/Steine wärmedämmend

Grundrohstoff:
- Holzhackschnitzel Handelsware
- Handelsbezeichnung G30
- Fichte / Tanne
- Rindenanteil < 5%
- Wassergehalt 40 %

Zerkleinerung mit einer Hammermühle PHMS 8 - 6 mit Langlochsieb 8x80 mm, Tabelle 2

| | | |
|---|---|---|
| Rohstoff zerkleinert | 222 kg | |
| Wassergehalt | 30 % | |
| Portlandzement CEM I 42,5 | 250 kg | Wasser-Zement (w/z) |
| Mineralisator CaCO3 | 60 kg | Wert 0,96 |
| Anmachwasser | 240 kg | |

Mischung:

| | |
|---|---|
| 1. Späne + Wasser | (T = 2 min) |
| 2. Mineralisator | (T = 3 min) |
| 3. Zement | (T= 7 min) |

fertiger Baustoff, verdichtet

| | |
|---|---|
| g-Dichte frisch | 772 kg/m³ |
| g-Dichte mit Ausgleichs- Wassergehalt ∼ 20 % | 665 kg/m³ |
| g-Dichte trocken (atro) | 620 kg/m³ |
| Festigkeit | 1,45 N/mm² |
| Biegezug | 0,45 N/mm² |
| Rλ | 0,146 W/mK |

**Beispiele Ib: bekannter Mineralisator Ca(OH)₂**

Mischung Baustoff für Wände/Steine wärmedämmend

Grundrohstoff:
- Holzhackschnitzel Handelsware
- Handelsbezeichnung G30
- Fichte / Tanne
- Rindenanteil < 5%
- Wassergehalt 40 %

Zerkleinerung mit einer Hammermühle PHMS 8 - 6 mit Langlochsieb 8x80 mm, Tabelle 2

| | | |
|---|---|---|
| Rohstoff zerkleinert | 222 kg | |
| Wassergehalt | 30 % | |
| Portlandzement CEM I 42,5 | 250 kg | Wasser-Zement (w/z) |
| Mineralisator Ca(OH)₂ | 120 kg | Wert 1,04 |
| Anmachwasser | 260 kg | |

Mischung:

| | |
|---|---|
| 1. Späne + Wasser | (T = 2 min) |
| 2. Mineralisator | (T = 3 min) |
| 3. Zement | (T= 7 min) |

fertiger Baustoff, verdichtet

| | |
|---|---|
| g-Dichte frisch | 852 kg/m³ |
| g-Dichte mit Ausgleichs- Wassergehalt ∼ 20 % | 750 kg/m³ |
| g-Dichte trocken (atro) | 670 kg/m² |
| Festigkeit | 1,20 N/mm² |
| Biegezug | 0,32 N/mm² |
| Rλ | 0,18 W/mK |

**Beispiel Ic:**

Mischung Baustoff für Wände/Steine wärmedämmend

Grundrohstoff: - Holzhackschnitzel Handelsware
- Handelsbezeichnung G30
- Fichte / Tanne
- Rindenanteil < 5%
- Wassergehalt 40 %

Zerkleinerung mit einer Hammermühle PHMS 8 - 6 mit Langlochsieb 8x80 mm, Tabelle 2

| | | |
|---|---|---|
| Rohstoff zerkleinert | 222 kg | |
| Wassergehalt | 30 % | |
| Portlandzement CEM I 42,5 R | 250 kg | Wasser-Zement (w/z) |
| Mineralisator CaCO₃/MgCO₃ | 60 kg | Wert 0,96 |
| Anmachwasser | 240 kg | |

Mischung:

| | |
|---|---|
| 1. Späne | |
| 2. Mineralisator | (T = 3 min) |
| 3. Zement | (T= 2 min) |
| 4. Anmachwasser | (T = 7 min) |

fertiger Baustoff, verdichtet

| | |
|---|---|
| g-Dichte frisch | 772 kg/m³ |
| g-Dichte mit Ausgleichs- Wassergehalt ∼ 20 % | 665 kg/m³ |
| g-Dichte trocken (atro) | 620 kg/m³ |
| Festigkeit | 1,48 N/mm² |
| Biegezug | 0,45 N/mm² |
| Rλ | 0,146 W/mK |

**Beispiel II:**

Mischung Baustoff für Wände/Steine nicht wärmedämmend

Grundrohstoff: - Holzhackschnitzel Handelsware
- Handelsbezeichnung G30
- Fichte / Tanne
- Rindenanteil < 5%
- Wassergehalt 40 %

Zerkleinerung mit einer Hammermühle PHMS 8 - 6 mit Langlochsieb 2,5x50 mm, Tabelle 3

| | | |
|---|---|---|
| Rohstoff zerkleinert | 240 kg | |
| Wassergehalt | 30 % | |
| Portlandzement CEM I 42,5 R | 280 kg | |
| Mineralisatoren | | Wasser-Zement (w/z) |
| 1. Schamottemehl 0-0,2 | 10 kg | Wert 0,96 |
| 2. Blähtonsand 0-1 | 50 kg | |
| Anmachwasser | 270 kg | |

Mischung:

| | |
|---|---|
| 1. Späne | |
| 2. Mineralisator 1 | (T = 3 min) |
| 3. Mineralisator 2 + Zement | (T= 2 min) |
| 4. Anmachwasser | (T = min) |

Fertiger Baustoff, verdichtet

| | |
|---|---|
| g-Dichte frisch | 850 kg/m³ |
| g-Dichte mit Ausgleichs- Wassergehalt ∼ 20 % | 730 kg/m³ |
| g-Dichte trocken (atro) | 680 kg/m³ |
| Festigkeit | 5,1 N/mm² |
| Biegezug | 2,2 N/mm² |
| Rλ | 0,17 W/mK |

**Beispiel IIa: bekannter Mineralisator CaCO₃**

Mischung Baustoff für Wände/Steine nicht wärmedämmend

Grundrohstoff: - Holzhackschnitzel Handelsware
- Handelsbezeichnung G30
- Fichte / Tanne
- Rindenanteil < 5%
- Wassergehalt 40 %

Zerkleinerung mit einer Hammermühle PHMS 8 - 6 mit Langlochsieb 2,5x50 mm, Tabelle 2

| | | |
|---|---|---|
| Rohstoff zerkleinert | 240 kg | |
| Wassergehalt | 30 % | |
| Portlandzement CEM I 42,5 | 280 kg | Wasser-Zement (w/z) |
| Mineralisator CaCO₃ | 60 kg | Wert 0,96 |
| Anmachwasser | 270 kg | |

Mischung:

| | |
|---|---|
| 1. Späne + Wasser | (T = 2 min) |
| 2. Mineralisator | (T = 3 min) |
| 3. Zement | (T= 7 min) |

fertiger Baustoff, verdichtet

| | |
|---|---|
| g-Dichte frisch | 850 kg/m³ |
| g-Dichte mit Ausgleichs- Wassergehalt ∼ 20 % | 730 kg/m³ |
| g-Dichte trocken (atro) | 680 kg/m³ |
| Festigkeit | 1,94 N/mm² |
| Biegezug | 0,75 N/mm² |
| Rλ | 0,175 W/mK |

**Beispiel IIb: bekannter Mineralisator Ca(OH)₂**

Mischung Baustoff für Wände/Steine nicht wärmedämmend

Grundrohstoff: - Holzhackschnitzel Handelsware
- Handelsbezeichnung G30
- Fichte / Tanne
- Rindenanteil < 5%
- Wassergehalt 40 %

Zerkleinerung mit einer Hammermühle PHMS 8 - 6 mit Langlochsieb 2,5x50 mm, Tabelle 2

| | | |
|---|---|---|
| Rohstoff zerkleinert | 240 kg | |
| Wassergehalt | 30 % | |
| Portlandzement CEM I 42,5 | 280 kg | Wasser-Zement (w/z) |
| Mineralisator Ca(OH)₂ | 120 kg | Wert 1,04 |
| Anmachwasser | 290 kg | |

Mischung:

| | |
|---|---|
| 1. Späne + Wasser | (T = 2min) |
| 2. Mineralisator | (T = 3 min) |
| 3. Zement | (T = 7 min) |

fertiger Baustoff, verdichtet

| | |
|---|---|
| g-Dichte frisch | 930 kg/m³ |
| g-Dichte mit Ausgleichs- Wassergehalt ∼ 20 % | 815 kg/m³ |
| g-Dichte trocken (atro) | 760 kg/m³ |
| Festigkeit | 1,65 N/mm² |
| Biegezug | 0,53 N/mm² |
| Rλ | 0,195 W/mK |

**Beispiel III**

Mischung Baustoff für statisch höher beanspruchte Wände und Steine

Grundrohstoff: - Hobelspäne Handelsware, Tabelle 1
- Handelsbezeichnung Allspan
- Fichte / Tanne
- Rindenanteil 0 %
- Wassergehalt < 20 %

| | | |
|---|---|---|
| Rohstoff zerkleinert | 257 kg | |
| Wassergehalt | 8 % | |
| Portlandzement CEM I 42,5 R | 270 kg | Wasser-Zement (w/z) |
| Mineralisator Blähtonsand 0-1 | 80 kg | Wert 1,1 |
| Anmachwasser | 297 kg | |

Mischung:

| | |
|---|---|
| 1. Späne + 20 % Wasser | (T = 2 min) |
| 2. Mineralisator | (T = 3 min) |
| 3. Zement + Restwasser | (T= 7 min) |

fertiger Baustoff, verdichtet

| | |
|---|---|
| g-Dichte frisch | 904 kg/m³ |
| g-Dichte mit Ausgleichs- Wassergehalt ∼ 20 % | 752 kg/m³ |
| g-Dichte trocken (atro) | 726 kg/m³ |
| Festigkeit | 8,5 N/mm² |
| Biegezug | 2,6 N/mm² |
| Rλ | 0,24 W/(m.K) |

**Beispiel IV**

Mischung Baustoff für Wärmedämmung als Plattenmaterial mit Putzträgerfunktion oder Füllmaterial für Hohlkammersteine zur Verbesserung der Wärmedämmung

Grundrohstoff: - Holzhackschnitzel Handelsware
- Handelsbezeichnung G30
- Fichte / Tanne
- Rindenanteil < 5%
- Wassergehalt 40 %

Zerkleinerung mit einer Hammermühle PHMS 8 - 6 mit Langlochsieb 2,5x50 mm, Tabelle 3

| | | |
|---|---|---|
| Rohstoff zerkleinert | 200 kg | |
| Wassergehalt | 30 % | |
| Portlandzement CEM I 42,5 | 80 kg | |
| Mineralisator Schamottemehl 0-0,2 mm | 10 kg | Wasser-Zement (w/z) Wert 0,88 |
| Anmachwasser | 70 kg | |

Mischung:

| | |
|---|---|
| 1. Späne + Mineralisator | (T = 3 min) |
| 2. Zement | (T= 2 min) |
| 3. Anmachwasser | (T = 7 min) |

fertiger Baustoff, verdichtet

| | |
|---|---|
| g-Dichte frisch | 360 kg/m³ |
| g-Dichte mit Ausgleichs- Wassergehalt ∼ 20 % | 350 kg/m³ |
| g-Dichte trocken (atro) | 322 kg/m³ |
| Festigkeit | 0,25 N/mm² |
| Biegezug | 0,09 N/mm² |
| Rλ | 0,071 W/(m.K) |

**Beispiel V:**

Mischung Baustoff für Wände/Steine wärmedämmend

Grundrohstoff: - Holzhackschnitzel Handelsware
- Handelsbezeichnung G30
- Rindenanteil < 5%

Zerkleinerung mit einer Hammermühle PHMS 8 - 6 mit Langlochsieb 8x80 mm, Tabelle 2

| | | |
|---|---|---|
| Rohstoff zerkleinert | 230 kg | |
| Wassergehalt | 55 % | |
| Portlandzement CEM I 42,5 R | 250 kg | Wasser-Zement (w/z) |
| Mineralisator Schamottemehl 0-0,2 | 60 kg | Wert 1,18 |
| Anmachwasser | 295 kg | |

Mischung:

| | |
|---|---|
| 1. Späne | |
| 2. Mineralisator | (T = 3 min) |
| 3. Zement | (T= 2 min) |
| 4. Anmachwasser | (T = 7 min) |

fertiger Baustoff, verdichtet

| | |
|---|---|
| g-Dichte frisch | 835 kg/m³ |
| g-Dichte mit Ausgleichs- Wassergehalt ∼ 20 % | 723 kg/m³ |
| g-Dichte trocken (atro) | 698 kg/m³ |
| Festigkeit | 6,1 N/mm² |
| Biegezug | 2,35 N/mm² |
| Rλ | 0,195 W/mK |

**Beispiel VI:**

Mischung Baustoff für Wände/Steine wärmedämmend

Grundrohstoff: - Miscanthus, Handelsware, gehäckselt

Zerkleinerung mit einer Hammermühle PHMS 8 - 6 mit Langlochsieb 8x80 mm, Tabelle 4

| | | |
|---|---|---|
| Rohstoff zerkleinert | 257 kg | |
| Wassergehalt | 30 % | |
| Portlandzement CEM I 42,5 R | 260 kg | |
| Mineralisator | | Wasser-Zement (w/z) |
| Blähtonsand 0-1 | 50 kg | Wert 1,1 |
| Schamottemehl 0 - 0,2 | 10 kg | |
| Anmachwasser | 285 kg | |

Mischung:

| | |
|---|---|
| 1. Späne | |
| 2. Mineralisator | (T = 3 min) |
| 3. Zement | (T= 2 min) |
| 4. Anmachwasser | (T = 7 min) |

fertiger Baustoff, verdichtet

| | |
|---|---|
| g-Dichte frisch | 886 kg/m:1 |
| g-Dichte mit Ausgleichs- Wassergehalt - 20 % | 624 kg/m³ |
| g-Dichte trocken (atro) | 588 kg/m³ |
| Festigkeit | 1,5 N/mm² |
| Biegezug | 0,52 N/mm² |
| Rλ | 0,122 W/mK |

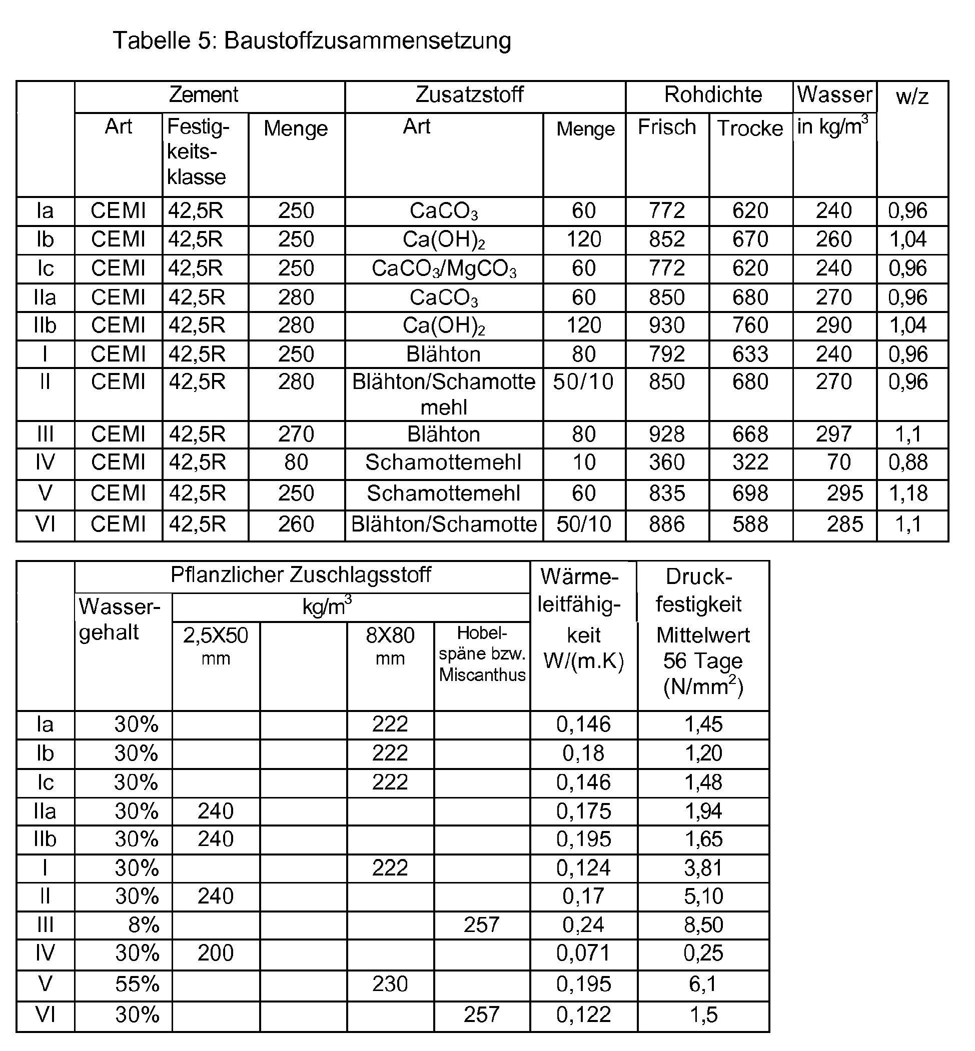

Beispiele Ia, Ib, Ic, IIa, IIb sind Vergleichsbeispiele und betreffen Baustoffe die nach bekanntem Stand der Technik wie oben beschrieben hergestellt wurden. Beispiele I - VI sind erfindungsgemäß hergestellte Baustoffe wie oben beschrieben, wobei bei Beispiel I, II, III und V Wert auf hohe Druckfestigkeit, bei Beispiel IV auf gute Wärmedämmeigenschaften gelegt wurde und Beispiel VI die Verwendung von Miscanthus als nachwachsenden Rohstoff aufzeigt.

Wie aus den Druckfestigkeitswerten der Beispiele I - III hervorgeht ermöglicht die Erfindung die Druckfestigkeiten erheblich im Vergleich zu bekannten ansonsten vergleichbaren Baustoffen zu erhöhen.

Für nichttragende wärmedämmende Baustoffe, siehe Beispiel IV, für deren Anwendung eine geringe Festigkeit ausreicht, sind außerdem sehr gute Wärmeleitfähigkeitswerte erreichbar.

Schließlich, hat sich herausgestellt, dass die erfindungsgemäßen Baustoffe verbesserte Beständigkeiten aufweisen.

## Patentansprüche

1. Baustoff oder Fertigmischung mit einem pflanzlichen Zuschlag, wobei der pflanzliche Zuschlag in Form von zerkleinerten Partikeln vorliegt, wobei der Baustoff weiterhin ein Bindemittel, bevorzugt Zement, sowie einen Mineralisator aufweist,
wobei der Mineralisator aus amorphen und/oder krypto- und feinkristallinen Silizium- und/oder Silizium-Aluminium- und/oder Silizium-Eisen- und/oder Silizium-Aluminium-Eisen-Träger natürlicher und/oder künstlich-industrieller Herkunft besteht oder diese enthält.

2. Baustoff oder Fertigmischung nach Anspruch 1, wobei der Mineralisator ausgewählt ist aus Kohleasche, Holzasche, Schmelzkammergranulat, Kesselasche, Eisensilikatschlacke, Gichtstäube, Blähtonmehl und -sande, Schamottemehle, Ziegelmehle, Metakaolin, gebrannter Tonschiefer, getemperter Phonolith, Bauxite, Rotschlamm, Quarzmehl, Si-Schlämme, Glasmehle/Glasabfälle künstlichen und natürlichen Ursprungs, wie z.B. Obsidian und Perlite, Rhyolithe, Tuffe, Kieselgur, Radiolariten, Diatomeenerden, Trass, Molererden, Gaize, Tripel und vulkanischer Asche, sowie deren Mischungen.

3. Baustoff oder Fertigmischung nach einem der Ansprüche 1 oder 2, wobei der Mineralisator im wesentlichen als feine Körnung von 0 bis 0,2 mm vorliegt, bevorzugt 0 bis 0,1 mm.

4. Baustoff oder Fertigmischung nach einem der Ansprüche 1 bis 3, wobei das Bindemittel ein Portlandzement CEM I, vorzugsweise der Festigkeitsklassen 42,5R und 52,5R ist.

5. Baustoff oder Fertigmischung nach einem der vorhergehenden Ansprüche, wobei das Gewichtsverhältnis von Bindemittel zu Mineralisator zwischen 50 : 50 und 99 : 1 liegt.

6. Baustoff oder Fertigmischung nach einem der vorhergehenden Ansprüche, wobei pro Kubikmeter des fertig verdichteten Baustoffs 50 kg bis 300 kg, bevorzugt 70 kg bis 280 kg Bindemittel eingesetzt werden, sowie 1 kg bis 300 kg Mineralisator.

7. Baustoff oder Fertigmischung nach einem der vorhergehenden Ansprüche, wobei der pflanzliche Zuschlag aus einem oder mehreren der folgenden Pflanzenbestandteile besteht: Miscanthus, Hanfschäben, Hanffasern, Nadelholz, Laubholz, Stroh, Switchgräser, Riedschilf, Bambus, oder diese enthält, und dass das spezifische Trockengewicht des pflanzlichen Zuschlags zwischen 10 und 350 kg/m³, bevorzugt zwischen 40 und 280 kg/m³ loses Schüttgut liegt.

8. Verfahren zur Herstellung eines Baustoffs nach einem der vorhergehenden Ansprüche, durch Mischen eines pflanzlichen Zuschlags in Form von zerkleinerten Partikeln, eines Bindemittels, bevorzugt Zement, eines Mineralisators, sowie Anmachwasser, wobei der Mineralisator aus amorphen, krypto- und feinkristallinen Silizium- und/oder Silizium-Aluminium- und/oder Silizium-Eisen- und/oder Silizium-Aluminium-Eisen-Träger natürlicher und/oder künstlich-industrieller Herkunft besteht oder diese enthält.

9. Verfahren nach Anspruch 8, wobei das gewichtsbezogene Verhältnis aus Anmachwasser zu Bindemittel zwischen 0,6 und 2,5, bevorzugt zwischen 0,70 und 1,50 liegt.

10. Verfahren nach Anspruch 8 oder 9, wobei der pflanzliche Zuschlag ein Wassergehalt von mehr als 20 % bis zu 60 %, bevorzugt zwischen 25 % und 55 %, aufweist.

11. Verwendung des Baustoffs oder der Fertigmischung nach einem der Ansprüche 1 bis 7 zur Herstellung von Wänden aus gemauerten Steinen oder aus vorgefertigten Wandelementen, von schalldämmendem Absorbermaterial, von schalldämmenden und/oder wärmedämmenden Bauelementen, von Putz, von Mörtel, von Estrich, von Schüttungen oder von Füllmaterial zur Ausfüllung von Gefachen.
